# EUROPEAN PATENT APPLICATION

(11) **EP 4 811 587 A1**
(43) Date of publication of application: **23.09.2026**
(21) Application number: 25164396.1
(22) Date of filing: 18.03.2025
(51) Int. Cl.: H02J 3/24, F03D 7/02, F03D 7/04, H02J 3/38, H02J 3/48

(54) **WIND TURBINE GENERATOR POWER BOOST FOR PRIMARY CONTROL**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The present invention relates to a method of operating a wind farm (2) including a plural of wind turbines (3), the method including for at least a group of the wind turbines (3) to be uprated wind turbines (3u) adapted to produce power in an uprated zone (25u) being power above the design power of the wind turbines (3u), and wherein the method includes, if an under-frequency deviation event in the grid (9) is detected, then (120) to operate least one of the uprated wind turbines (3u) to produce power in the uprated zone (25u) and provide this as control power to stabilize the grid (9).

The present invention further relates to a wind turbine or wind farm operated according to the method and a controller adapted to operate the method.

## Description

### FIELD OF THE INVENTION

The electrical utility grids are increasingly being supplied by renewable systems, such as wind powered generators, often arranged in wind farms with multiple wind turbines operating together.

The generated power is feed to the electrical distribution grid, or utility grid, to be provided as power for end users. The current in the utility grid adapted to operate at a utility frequency, or mains frequency, which is the nominal frequency of the oscillations of alternating current (AC), which in large parts of the world this is 50 Hz or 60 Hz. The frequency stability in Europe is regulated by the grid association ENTSO-E.

In practice, the exact frequency of the grid varies around the nominal frequency, reducing when the grid is heavily loaded, and speeding up when lightly loaded.

Thus, if the frequency drops, this may be to insufficient electricity in the grid according to the load, or the demand. If the frequency rises, there is too much electricity in the grid. The power station generators then traditionally are switched on or off to stabilize the frequency.

In practice the utility grids are operated with the aim of keeping the utility frequency within a narrow frequency range around the nominal frequency. This means, they are controlled with the aim to keep the utility to be below an upper grid frequency threshold and above a lower grid frequency threshold. These may be e.g. 0.2 Hz above or below the nominal frequency, thus aiming to keep the utility frequency e.g. as 50 Hz ± 0.2 Hz.

Traditionally the response to deviations outside the frequency range is divided into separate control regimes, the primary frequency response, and the secondary frequency response.

These responses are classified due to the methods for providing each service with conventional generators, for example synchronous generator inertia and generator governors usually may be the primary response, and for example output control responding to system operator power level demands for the secondary frequency response. The primary control often is required to occurs within the timeframe of 20 - 30 seconds, and the secondary control occurs within the timeframe of 5 - 10 minutes.

At the present however wind farms only provide a negative control power, enabling a throttling, or curtailment, of the wind turbines.

The object of the present invention is to provide a method for wind farms to participate with control power to the grid.

### SUMMARY OF THE INVENTION

The object of the invention is achieved by the independent claims. The dependent claims describe advantageous developments and modifications of the invention.

This includes introducing a method of operating a wind farm including a plural of wind turbines, the method including for at least a group of the wind turbines to be uprated wind turbines adapted to produce power in an uprated zone being power above the design power of the wind turbines, and wherein the method includes, if an under-frequency deviation event in the grid is detected, then to operate least one of the uprated wind turbines to produce power in the uprated zone and provide this as control power to stabilize the grid.

The grid could be the transmission grid, utility grid, or a local distribution grid if the wind turbine is connected to a distribution grid, this e.g. being a distribution grid within the wind farm.

The method may thus comprise a step, where at least one, or a sub-part, or all the uprated wind turbines is instructed to operate within the uprated zone to provide control power.

The power increase forming a positive control power may be realized by changing the pitch, yaw, motor torque above upper thresholds or the like, or any combination thereof.

The method may comprise a step of a request being provided for the wind farm to provide control power due to a deviation event, or a request sent to each wind turbine.

The method may comprise a step of checking if the uprated wind turbines are able of producing power in the uprated zone. A first fraction of the uprated zone of at least one or some of the uprated wind turbines may be reserved for positive control power generation. A second fraction of the uprated zone of at least one or some of the uprated wind turbines may be reserved for power boosts unrelated to control power.

The uprated wind turbines may be operated in the uprated zone only for a predefined power control time-period. The given power control time-period may be related to the severity of deviation event and/or the speed whereby the deviation event crossed a threshold and/or to the offset relative to narrow nominal frequency range. This is a range covering, e.g. centering, the nominal frequency. They are thereby controlled with the aim to maintain the utility below an upper grid frequency threshold and above a lower grid frequency threshold. The thresholds may be 0.2 Hz above or below the nominal frequency. The aim thus is to keep the utility frequency e.g. as 50 Hz ± 0.2 Hz.

Alternatively, the time-period is a fixed time or depends on a measured component temperature and/or remaining useful lifetime of selected components.

Another option could be wind speed or turbulence as this might be restrictive for the time a wind turbine is being operated in the uprated region.

Factors such as component remaining lifetimes of the uprated wind turbines may be considered in assignment of wind turbine control powers to the individual uprated wind turbines.

A reserved group of the uprated wind turbines may be reserved to provide positive control power.

Multiple of the wind turbines may be uprated wind turbines with defined sub-zones, but where only the uprated wind turbines of the reserved group have sub-zones reserved for wind farm positive control power generation, corresponding to a first fraction of the uprated zone.

The selection of uprated wind turbines of the reserved group may be selected based on the wind direction.

Multiple wind farms may be operating in connection to provide wind farm positive control power, such that insufficient availability of requested wind farm positive control power of one wind farm is compensated with wind farm positive control power from other wind farms. The method includes a check if any of the connected wind farms have available wind farm positive control power.

If the wind farms are not experiencing the same event deviation, and only one or some of the wind farms are requested to provide more positive wind farm control power than possible according to the present wind at the wind farm location(s), then the method may include for the missing wind farm control power to be provided by other connected wind farms, either directly to the grid from the respective wind farms, or via the wind farm experiencing the insufficiency itself.

The positive wind farm control power may be split between the wind farms, enabling the most available of the wind farms for example to provide a higher fraction of a total positive power request. The method thus may include a step of checking for availability of positive control power from the uprated zones from the individual wind farms, and then split it based on predefined conditions, for example control power availability.

The method thus may be used on multiple of wind farms further being in power communication and being operated such that uprated wind turbines from one wind farm can power wind turbines of other wind farms with power from the uprated zone to provide control power.

The present invention further relates to a wind turbine or wind farm operated according to the method of any of the embodiments.

The present invention further relates to a controller adapted to operate the method according to any of the embodiments. The controller could be part of existing wind turbine, wind farm or grid controllers. It would comprise the needed processor, data-storage means etc. to store and process the data and the respective input and output.

For any of the embodiments the control power may be a positive control power adapted for the primary control and thus to operate on a fast schedule, such as within e.g. below 20-30 seconds of a deviation event detection.

### BRIEF DESCRIPTION OF THE DRAWINGS

Embodiments of the invention are now described, by way of example only, with reference to the accompanying drawings, of which:
- Figure 1: shows a schematic and typical electrical supply and distribution system supplied by power produced by a plural of wind turbines in a wind farm.
- Figure 2: shows respectively a design power curve and an uprated power curve, and with an uprated zone in-between.
- Figure 3: illustrates steps according to embodiments of the present invention.
- Figure 4: shows respectively a design power curve and an uprated power curve, and with an uprated zone in-between divided into different fractions.
- Figure 5: shows an embodiment where only a sub-part of the uprated wind turbines is reserved to provide control power, especially positive control power.
- Figure 6: shows and embodiment where multiple wind farms are connected to share wind farm control power.
- Figure 7: shows a further step according to the embodiment of figure 3 of checking for availability of positive control power from the uprated zones from individual wind farms

The illustration in the drawings is in schematic form. It is noted that in different figures, similar or identical elements may be provided with the same reference signs.

### DESCRIPTION OF THE DRAWINGS

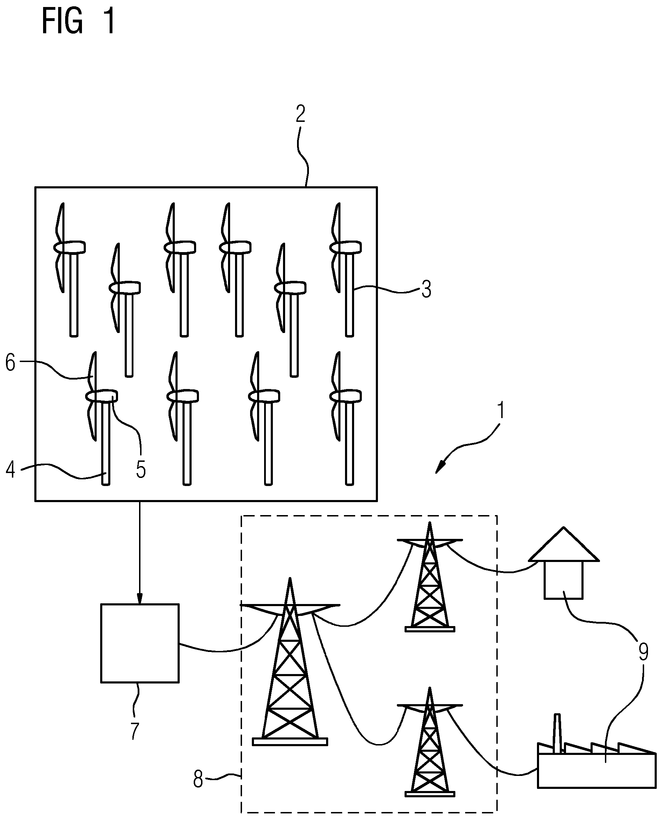

Figure 1 is a schematic illustration of an electrical supply and distribution system 1. The power is supplied a renewable power source, which could be in the form of a collection of wind turbines 3, also referred to as a wind farm 2, or wind park.

The individual wind turbines 3 each are formed with a tower 4 and a nacelle 5 which comprises a hub and a rotor with blades 6 to catch the wind. A generator is connected to the rotor to convert a rotation into electrical power.

The generated power is feed to distributions systems 7 which includes substations, transformers etc. From the distribution systems 7 the power is feed to the electrical distribution grid 8, or utility grid, to be provided as power for end-users 9.

A wind turbine 3 usually is operated with settings optimized to maximize power production, or generation, for example aiming to operate as close to the Betz-optimal coefficient as possible.

The electrical distribution grid 8 is adapted to operate according to a utility frequency, or mains frequency. This is the utility grid 9 alternating current (AC) nominal frequency. In large parts of the world this is 50 Hz or 60 Hz.

In practice, the exact utility frequency varies around the nominal frequency, going down when the grid is heavily loaded, and going up when lightly loaded.

Thus, if the frequency drops, this may be to insufficient electricity in the grid according to the load, or the demand. Similarly, if the frequency rises, there is too much electricity. The frequency stabilization traditionally is done by switching on or off the generators of the power stations.

The utility grids 9 are operated with the aim of keeping the utility frequency within a narrow nominal frequency range. This is a range covering, e.g. centering, the nominal frequency. They are thereby controlled with the aim to maintain the utility below an upper grid frequency threshold and above a lower grid frequency threshold. The thresholds may be 0.2 Hz above or below the nominal frequency. The aim thus is to keep the utility frequency e.g. as 50 Hz ± 0.2 Hz.

Responses to grid frequency events like over-frequency or under-frequency, where the utility frequence exits the narrow frequency range, respectively increasing above the upper threshold or dropping below the lower threshold, is divided into separate control regimes, where these includes the primary frequency response, and the secondary frequency response.

The classifications are based on their implementation methods by conventional generators. For example, synchronous generator inertia and generator governors usually form the primary response, whereas output control in response to system operator power level demands forms the secondary frequency response. A primary control often is required within the timeframe of 20 - 30 seconds, and a secondary control within the timeframe of 5 - 10 minutes.

In the present text the power used to regulate the utility frequency in case of frequency events is referred to as control power. In cases with insufficient power in the utility grid 9, the general response is a positive control power, where the power feed to the utility grid is increased. In the same manner, if there are too much power in the utility grid 9, the general response is a negative control power, where the power feed to the utility grid 9 is decreased.

At the present wind farms only provide a negative power control power carried out by a throttling or curtailment of the wind turbines 3. A possible implementation of positive control power input for wind farms 2 could simply to operate the wind turbines 3 curtailed, reserving e.g. the last 2% power production up to design power production for the frequency control. This will however be at the cost of less earnings due to a smaller power production.

The performance of a wind turbine 3 usually is expressed by its power curve, which shows the relationship between the power output of the turbine at different wind speeds, from cut-in 30 to cut-off 32. The power curve indicates the design power at different wind speeds.

Design power is also frequently referred to a rated power or nominal power and may be a relation given and certified by the manufacturer of the wind turbine 3. It gives the power production of the wind turbine 3 when it operates un-curtailed, thus a maximal power production, when the wind turbine is operated at normal operational settings allowing operation for perhaps more than 20 years without disproportionate tear and wear of the components.

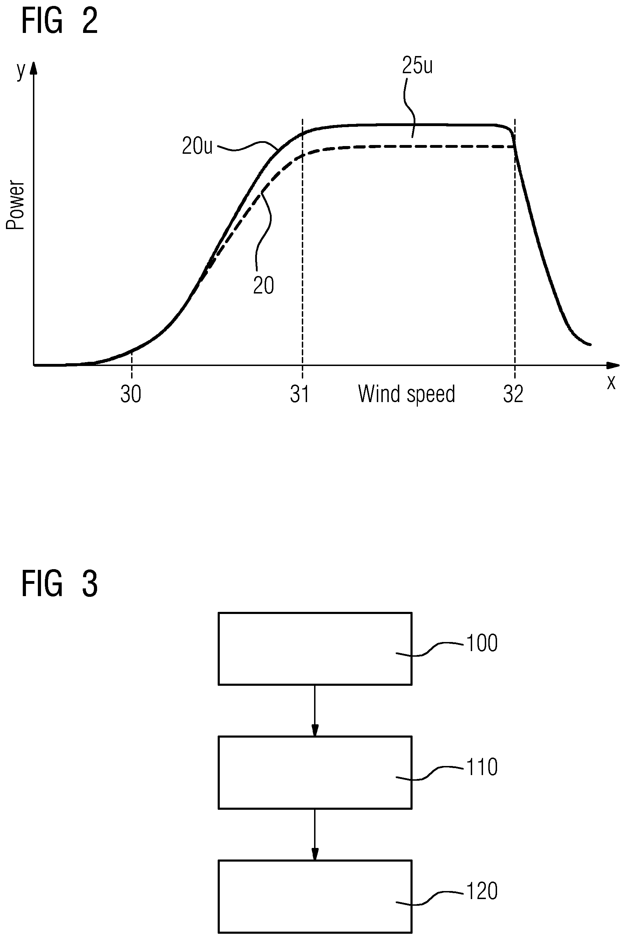

This is also illustrated in figure 2 showing design power production 20 (y-axis) of a wind turbine 3 relative to wind speed (x-axis).

In the recent years some wind turbines 3 have been developed adapted to as operate as uprated wind turbines 3u able to run in an uprated state, at least in relative short periods of time. Figure 2 illustrates an uprated power curve 20u in addition to the power curve 20. In normal operation the uprated wind turbines 3u is run at normal settings like any other wind turbine 3 corresponding to the power curve 20. Periodically, e.g. under high wind conditions, more power (such as in the order of 6-10% relative to the design power) may be extracted by applying uprated settings allowing power in an uprated zone 25u. The uprated zone 25u is defined as the area of power production between the power curve 20 and the upper limit of the uprated power production defined by the uprated power curve 20u.

The uprated wind turbines 3u will only periodically be operated in the uprated zones 25u since this otherwise comes at the cost of significant reduced lifetime of the wind turbines 3u.

Examples of such uprated wind turbines 3u are for example fund in the publications EP 3 987 173 Bland WO 2024/083556 A1.

Operating in the uprated zone 25u may be achieved by advanced and intelligent control algorithms, not involving structural changes to the wind turbine 3u mechanical components. The control may be materialized to changes in particularly to the generator torque and/or pitch, yaw etc. It thus is possible to active the uprated states of operation of the wind turbines 3u in short time, such as in the order of seconds.

According to an embodiment of the present invention the method involves the control of a wind farm, where at least one of the wind turbines 3 is an uprated wind turbine 3u. Alternatively at least a group comprising multiple of the wind turbines 3 are uprated wind turbines 3u. In one embodiment all the wind turbines 3 are uprated wind turbines 3u.

The method of the present invention relates to the control of the wind farm 2 in response to instabilities in the utility frequency. This may relate to deviations events like undervoltage events and/or overvoltage events.

Power plants in general includes a power reserve to provide positive control power to the grid 9 when needed, e.g. by energy storages, generators using other kinds of fuels like diesel or gas, etc. As previously indicated, for wind farms traditionally do not provide positive control power, just as no power are kept in reserve for the control of the utility frequency.

The present invention may, but not exclusively, be relevant for situations where wind farm 2 operates at full power, meaning all wind turbines 3, 3u are operated un-curtailed and according to their design power curves 20. The present invention is also relevant for example for situations where the wind farm 2 operates curtailed, but still at power production leaving an insufficient power reserve difference to the wind turbine 3 design powers to provide a required or requested wind farm positive control power to the grid 9.

The wind farm power in general is the collective control powers from the wind turbines 3u in the wind farm 2 supplied to the grid 9 in response to a grid deviation event. This then can be negative or positive wind turbine control power aggregating to respective negative and positive wind farm control power.

As illustrated in the embodiment of figure 3, a first step 100 a request for the wind farm to provide control power due to a deviation event. This may be a wind farm controller, e.g. the SCADA, registering a local or global deviation, it may also be an operator of the utility grid 9 sending information to the wind farm controller etc. In general, the step 100 is simply for a wind farm controller and/or the individual wind turbine controllers etc., to be informed of a request to provide control power.

The method may further comprise a step 110 of checking if the uprated wind turbines 3u are able of producing power in the uprated zone 25u. The information may be a frequent communication, it may be registered and stored wind farm data, for example stored registered and stored by the wind farm controller or another database. In case of a deviation event the information then is to be already available. Alternatively, the needed information, such as the present wind conditions and wind turbine 3, 3u operating status, and then estimate, or calculate, how much wind farm control power is available.

The method further includes a step 120, where at least one, or a sub-part, or all the uprated wind turbines 3u in instructed to operate by uprated settings, meaning operating within the uprated zone 25u, and to provide this additional uprated power as positive control power to the utility grid.

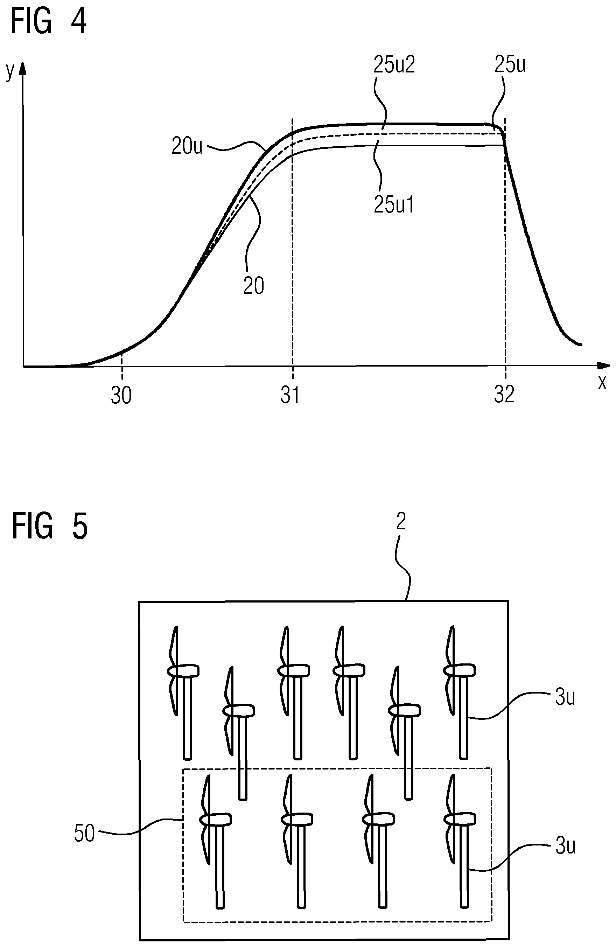

In one embodiment the uprated zone 25u of at least one or some of the uprated wind turbines 3u is split into sub-zones 25u1, 25u2 etc. as illustrated figure 4. In the illustration the upper sub-zone 25u2 is the one closest to the uprated power curve 20u. The upper sub-zone 25u2 in one embodiment is reserved for utility frequency control, as positive control power. The advantage is, if the wind conditions are right, there will always be available control power. A further advantage is, the wind turbines 3u still are available for power boosts in case of high winds power, where provide power from the uprated zone 25u, such as in one or more of the lower 25u1. Such power boosts are unrelated to control power and is mere short-termed boosts to provide more power when available.

In one embodiment a reserved group 50 of the uprated wind turbines 3u are reserved to provide positive control power, such as illustrated in figure 5. This may offer the same advantages as the embodiment of figure 4, in that, if the wind conditions are right, there will always be available control power. A further advantage is, the wind turbines 3u not in the reserved group 50 in case of high winds, still is available to increase power productions in power boost, where they for periods in time produce the power in the uprated zone 25u.

The embodiments of figures 4 and 5 may be combined. For example, all the uprated wind turbines 3u may have defined sub-zones 25u1, 25u2, only the ones in the reserved group 50 having reserved sub-zones 25u2. It may also be only the wind turbines 3u of the reserved group 50 has defined sub-zones 25u1, 25u2 with one being reserved for providing control power.

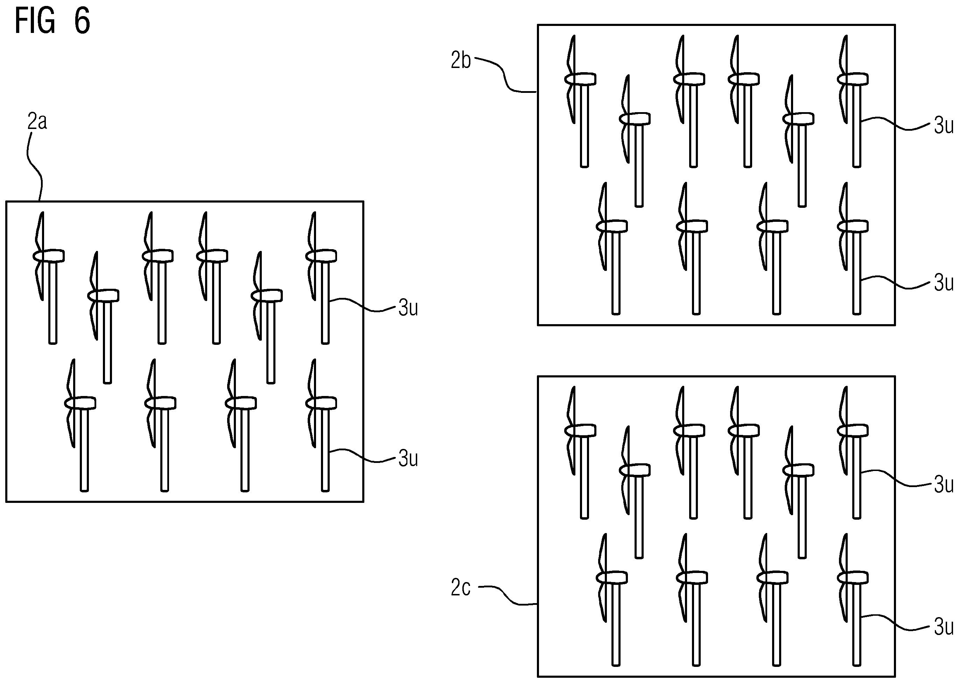

In one embodiment multiple wind farms 2a, 2b, 2c operates in connection as illustrated in figure 6. In some situations, the wind conditions for one or more of the wind farms 2a may be insufficient to generate a requested wind farm control power. At other of the connected wind farms 2b, 2c locations the wind conditions allow wind farm control power production in the uprated zone 25u. In this case, one or some of the wind farms 2b, 2c with available wind farm control power then is operated according to any of the previous embodiments to compensate for the missing power from the wind farms with insufficient wind conditions. This positive control power then compensates for the lack of power needed according to a present load and counteracts deviation events of the utility frequency.

This embodiment may include a check if any of the connected wind farms 2a, 2b, 2c has available wind farm positive control power.

In some embodiments the wind farms 2a, 2b, 2c are not experiencing the same event deviation, thus only one or some of the wind farms 2a are requested to provide positive wind farm control power. If such a wind farm 2a is unable to deliver as requested, the missing wind farm control power from other connected wind farms 2b, 2c may be provided directly to the grid 9 from the respective wind farms 2b, 2c, or via the wind farm 2a itself.

In a related embodiment, the wind farms 2b, 2c with sufficient wind conditions are set to be operating in the uprated zone 25u to compensate for lack of positive control power provided from the wind farms 2a with insufficient conditions.

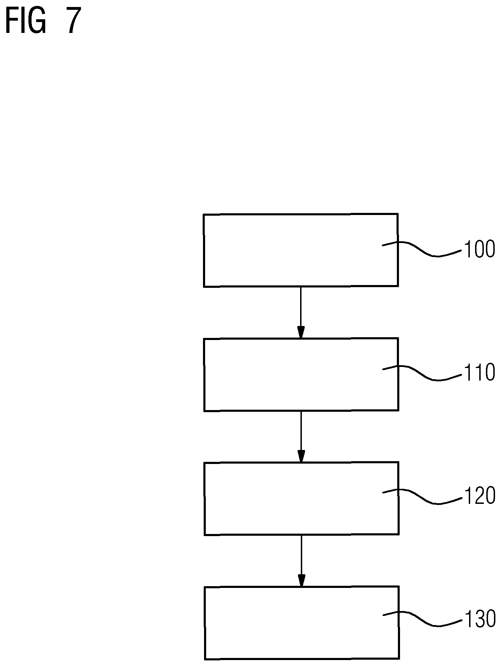

It may also be such, that the positive control power is split between the wind farms 2a, 2b, 2c. The method thus could provide a step 130 (see figure 7) of checking for availability of positive control power from the uprated zones 25u from the individual wind farms 2a, and then split it based on predefined conditions.

Further, to avoid unduly degradation of the parts of the wind turbines 3u when being operated in the uprated zone 25u, this will be done only for a given power control time-period.

The given power control time-period may be given in relation to for example the size of the severity of deviation event. For example, the size of the deviation to the upper or lower grid frequency thresholds (particular the lower grid frequency threshold in case of insufficient power in the utility grid requiring a positive control power). It may also be the speed whereby the deviation crossed the respective thresholds. Such factors, together with information regarding the state of the utility grid, the present power amount, load requirement etc., can then be translated into an expected requirement of control power to regulate the utility frequency back to within the frequency range.

Correspondingly, or alternatively, such parameters could be used to define a total amount of control power required to regulate the utility frequency back to within the frequency range within a predefined control time-period, such as in the order of seconds (e.g. less than 30 seconds), or minutes. This total amount of control power then can be translated by estimates, algorithms, calculations etc. into a power control period.

Factors like component remaining lifetimes of the uprated wind turbines 3u may also be considered in the assigning of wind turbine control powers to the individual uprated wind turbines 3u.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. Method of operating a wind farm (2) including a plural of wind turbines (3), the method including for at least a group of the wind turbines (3) to be uprated wind turbines (3u) adapted to produce power in an uprated zone (25u) being power above the design power of the wind turbines (3u), and wherein the method includes, if an under-frequency deviation event in the grid (9) is detected, then (120) to operate least one of the uprated wind turbines (3u) to produce power in the uprated zone (25u) and provide this as control power to stabilize the grid (9).

2. Method according to claim 1, wherein the method comprises a step (100) of a request being provided for the wind farm (2) to provide control power due to a deviation event.

3. Method according to claim 1 or 2, wherein the method comprises a step (110) of checking if the uprated wind turbines 3u are able of producing power in the uprated zone (25u).

4. Method according to claim 1, 2 or 3, wherein a first fraction (25u2) of the uprated zone (25u) of at least one or some of the uprated wind turbines (3u) is reserved for positive control power generation.

5. Method according to claim 4, wherein a second fraction (25u1) of the uprated zone (25u) of at least one or some of the uprated wind turbines (3u) is reserved for power boosts unrelated to control power.

6. Method according to any of the previous claims, wherein the uprated wind turbines (3u) are operated in the uprated zone (25u) only for a predefined power control time-period.

7. Method according to claim 6, wherein the given power control time-period is related to the severity of deviation event and/or the speed whereby the deviation event crossed a threshold.

8. Method according to any of the previous claims, wherein factors like component remaining lifetimes of the uprated wind turbines (3u) are considered in the assigning of wind turbine control powers to the individual uprated wind turbines (3u).

9. Method according to any of the previous claims, wherein a reserved group (50) of the uprated wind turbines (3u) are reserved to provide positive control power.

10. Method according to any of the previous claims, wherein multiple of the wind turbines (3) are uprated wind turbines (3u) with defined sub-zones (25u1, 25u2), but where only the uprated wind turbines (3u) of the reserved group (50) have sub-zones (25u2) reserved for wind farm positive control power generation.

11. Method according to any of the previous claims, wherein multiple wind farms (2a, 2b, 2c) operate in connection to provide wind farm positive control power, such that insufficient availability of requested wind farm positive control power of one wind farm (2a) is compensated with wind farm positive control power from other wind farms (2b, 2b).

12. Method according to claim 11, wherein the method includes a check if any of the connected wind farms (2b, 2c) have available wind farm positive control power.

13. Method according to claim 11 or 12, wherein, if the wind farms (2a, 2b, 2c) are not experiencing the same event deviation, and only one or some of the wind farms (2a) are requested to provide more positive wind farm control power than possible according to the present wind at the wind farm location(s), then the missing wind farm control power from other connected wind farms (2b, 2c) is provided directly to the grid (9) from the respective wind farms (2b, 2c), or via the wind farm (2a) itself.

14. Wind turbine (3u) or wind farm (3) operated according to the method of any of the previous claims.

15. Controller adapted to operate the method according to any of the previous claims 1-13.
